(19)

Europäisches Patentamt

European Patent Office

Office européen des brevets

(11) **EP 3 518 542 A1**

(12) **EUROPEAN PATENT APPLICATION**

(43) Date of publication:
**31.07.2019   Bulletin 2019/31**

(51) Int Cl.:
**H04N 19/463** *(2014.01)*       **H04N 19/625** *(2014.01)*

(21) Application number: **18305085.5**

(22) Date of filing: **30.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **THOMSON LICENSING**
**92130 Issy les Moulineaux (FR)**

(72) Inventors:
• **LELEANNEC, Fabrice**
  **35576 Cesson-Sévigné Cedex (FR)**
• **NASER, Karam**
  **35576 Cesson-Sévigné Cedex (FR)**
• **FRANCOIS, Edouard**
  **35576 Cesson-Sévigné Cedex (FR)**

(74) Representative: **Huchet, Anne et al**
**InterDigital CE Patent Holdings**
**20, rue Rouget de Lisle**
**92130 Issy-les-Moulineaux (FR)**

(54) **METHODS AND DEVICES FOR PICTURE ENCODING AND DECODING USING MULTIPLE TRANSFORMS**

(57)     A decoding method is disclosed. Information identifying a transform in a set of transforms is decoded (S220). A block of transform coefficients is also decoded (S230). The block of transform coefficients is transformed (S240) into a block of residuals using the identified transform.

The identified transform is derived from a set of at least a first transform and a second transform, wherein the identified transform is different from said first and second transforms.

FIGURE 4

EP 3 518 542 A1

**Description**

1. TECHNICAL FIELD

The present embodiments generally relate to methods and devices for picture encoding and decoding, and more particularly, to methods and devices for picture encoding and decoding using multiple transforms.

2. BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original picture block and the predicted picture block, often denoted as prediction errors or prediction residuals or more simply residuals, are transformed, quantized and entropy coded. To reconstruct the video, the compressed data is decoded by inverse processes corresponding to the prediction, transform, quantization and entropy coding.

In recent video codec designs multiple transforms are used instead of the single Discrete Cosine Transform of type II, denoted DCT-II. Specifying multiple transforms and selecting one of them locally, e.g. per picture block, makes it possible to improve coding efficiency. However, using multiple transforms increases memory requirement and encoder/decoder complexity.

3. BRIEF SUMMARY

A decoding method is disclosed that comprises :

- decoding information identifying a transform in a set of transforms;
- decoding a block of transform coefficients; and
- transforming the block of transform coefficients into a block of residuals using the identified transform;

wherein the identified transform is derived from a set of at least a first transform and a second transform, wherein the identified transform is different from the first and second transforms.

A decoding device is disclosed that comprises :

- means for decoding information identifying a transform in a set of transforms;
- means for decoding a block of transform coefficients; and
- means for transforming the block of transform coefficients into a block of residuals using the identified transform;

wherein the identified transform is derived from a set of at least a first transform and a second transform, wherein the identified transform is different from the first and second transforms.

A decoding device is disclosed that comprises a communication interface configured to access at least a bitstream and at least one processor configured to:

- decode information identifying a transform in a set of transforms from the accessed bitstream;
- decode a block of transform coefficients from the accessed bitstream; and
- transform the block of transform coefficients into a block of residuals using the identified transform;

wherein the identified transform is derived from a set of at least a first transform and a second transform, wherein the identified transform is different from the first and second transforms.

A computer program or a medium storing such a computer program is disclosed, wherein the computer program comprises software code instructions for performing the decoding method when the computer program is executed by a processor.

A machine readable medium is disclosed that has stored thereon machine executable instructions that, when executed, implement a decoding method, the method comprising:

- decoding information identifying a transform in a set of transforms;
- decoding a block of transform coefficients; and
- transforming the block of transform coefficients into a block of residuals using the identified transform;

wherein the identified transform is derived from a set of at least a first transform and a second transform, wherein the identified transform is different from the first and second transforms.

In one embodiment, the identified transform is obtained from a set of at least a first transform and a second transform by one or more of a sign change operation and an order reverse operation.

In one embodiment, the first transform is a discrete cosine transform of type-II and the second transform is a discrete cosine transform of type-VIII.

In one embodiment, wherein the identified transform being a discrete sine transform of type-I, the identified transform is obtained by:

- reversing order of transform coefficients of the block of transform coefficients;
- applying an inverse discrete cosine transform of type-II on the block of transform coefficients after order reversing to obtain a block of residuals; and
- changing the sign of odd ordered residuals of the block of residuals.

In one embodiment, wherein the identified transform being a discrete sine transform of type-VII, the identified transform is obtained by:

- changing the sign of odd ordered transform coefficients of the block of transform coefficients;
- applying a forward discrete cosine transform of type-VIII on the block of transform coefficients after sign change to obtain a block of residuals; and
- reversing order of residuals in the block of residuals.

In one embodiment, wherein the identified transform being a discrete sine transform of type-I, the identified transform is obtained by:

- reversing order of the transform coefficients of the block of transform coefficients;
- applying a forward discrete cosine transform of type-VIII on the block of transform coefficients after reversing order to obtain a block of residuals; and
- changing the sign of odd ordered residuals of the block of residuals.

In one embodiment, the first transform is a discrete cosine transform of type-II and the second transform is a discrete cosine transform of type-IV.

An encoding method is disclosed that comprising:

- obtaining a block of residuals;
- identifying a transform in a set of transforms;
- transforming the block of residuals into a block of transform coefficients using the identified transform; and
- encoding the block of transform coefficients and information identifying the transform in the set of transforms;

wherein the identified transform is derived from a set of at least a first transform and a second transform, wherein the identified transform is different from the first and second transforms.

An encoding device is disclosed that comprises:

- means for obtaining a block of residuals;
- means for identifying a transform in a set of transforms;
- means for transforming the block of residuals into a block of transform coefficients using the identified transform;
- means for encoding the block of transform coefficients and information identifying the transform in the set of transforms;

wherein the identified transform is derived from a set of at least a first transform and a second transform, wherein the identified transform is different from the first and second transforms.

An encoding device is disclosed that comprises a communication interface configured to access at least an image block and at least one processor configured to:

- obtain a block of residuals from the accessed image block;
- identify a transform in a set of transforms;
- transform the block of residuals into a block of transform coefficients using the identified transform;
- encode the block of transform coefficients and information identifying the transform in the set of transforms;

wherein the identified transform is derived from a set of at least a first transform and a second transform, wherein the identified transform is different from the first and second transforms.

A computer program or a medium storing such a computer program is disclosed, wherein the computer program comprises software code instructions for performing the encoding method when the computer program is executed by a processor.

A machine readable medium is disclosed that has stored thereon machine executable instructions that, when executed, implement an encoding method, the method comprising:

- obtaining a block of residuals;
- identifying a transform in a set of transforms;
- transforming the block of residuals into a block of transform coefficients using the identified transform; and
- encoding the block of transform coefficients and information identifying the transform in the set of transforms;

wherein the identified transform is derived from a set of at least a first transform and a second transform, wherein the identified transform is different from the first and second transforms.

A bitstream formatted to include encoded data representative of a block of a picture, the encoded data encoded according to the encoding method according to any one of the embodiments disclosed.

In one embodiment, the identified transform is obtained from a set of at least a first transform and a second transform by one or more of a sign change operation and an order reverse operation.

In one embodiment, the first transform is a discrete cosine transform of type-II and the second transform is a discrete cosine transform of type-VIII.

In one embodiment, wherein the identified transform being a discrete sine transform of type-I, the identified transform is obtained by:

- changing the sign of odd ordered residuals;
- applying a forward of discrete cosine transform of type-II on the block of residuals after sign change to obtain a block of transform coefficients; and
- reversing order of the transform coefficients in the block of transform coefficients.

In one embodiment, wherein the identified transform being a discrete sine transform of type-VII, the identified transform is obtained by:

- reversing order of the residuals in the block of residuals;
- applying a forward discrete cosine transform of type-VIII on the block of residuals after reversing order to obtain a block of transform coefficients; and
- changing the sign of odd ordered transform coefficients.

In one embodiment, wherein the identified transform being a discrete sine transform of type-I, the identified transform is obtained by:

- changing the sign of odd ordered residuals;
- applying a forward of discrete cosine transform of type-VIII on the block of residuals after sign change to obtain a block of transform coefficients; and
- reversing order of the transform coefficients in the block of transform coefficients.

In one embodiment, the first transform is a discrete cosine transform of type-II and the second transform is a discrete cosine transform of type-IV.

4. BRIEF SUMMARY OF THE DRAWINGS

- Figure 1 represents an exemplary architecture of a transmitter configured to encode a picture in a bitstream according to a specific and non-limiting embodiment;
- Figure 2 illustrates an exemplary video encoder, e.g. an encoder of HEVC type, adapted to execute the encoding method;
- Figure 3 represents a flowchart of a method for encoding a picture block in a bitstream according to a specific and non-limiting embodiment;

- Figure 4 represents a flowchart of a method for obtaining a block of transform coefficients from a block of residuals according to an exemplary embodiment;
- Figure 5 represents a flowchart of a method for obtaining a block of transform coefficients from a block of residuals according to another exemplary embodiment;
- Figure 6 represents an exemplary architecture of a receiver 2000 configured to decode a picture from a bitstream to obtain a decoded picture according to a specific and non-limiting embodiment;
- Figure 7 illustrates a block diagram of an exemplary video decoder 200, e.g. of the HEVC type, adapted to execute the decoding method;
- Figure 8 represents a flowchart of a method for decoding a picture block from a bitstream according to a specific and non-limiting embodiment;
- Figure 9 represents a flowchart of a method for obtaining a block of residuals from a block of transform coefficients according to an exemplary embodiment; and
- Figure 10 represents a flowchart of a method for obtaining a block of residuals from a block of transform coefficients according to another exemplary embodiment.

## 5. DETAILED DESCRIPTION

It is to be understood that the figures and descriptions have been simplified to illustrate elements that are relevant for a clear understanding of the present embodiments, while eliminating, for purposes of clarity, many other elements found in typical encoding and/or decoding devices.

Various methods are described below, and each of the methods comprises one or more steps or actions for achieving the described method. Unless a specific order of steps or actions is required for proper operation of the method, the order and/or use of specific steps and/or actions may be modified or combined.

Reference to "one embodiment" or "an embodiment" of the present principles, as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

It will be understood that, although the terms first and second may be used herein to describe various elements, these elements should not be limited by these terms. These terms are only used to distinguish one element from another.

It is to be appreciated that the use of any of the following "/", "and/or", "at least one of", and "one or more of A, B, and C", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

A picture is an array of luma samples in monochrome format or an array of luma samples and two corresponding arrays of chroma samples (or three arrays of trichromatic color samples such as RGB) in 4:2:0, 4:2:2, and 4:4:4 colour format. Generally, a "block" addresses a specific area in a sample array (e.g., luma Y), and a "unit" includes the collocated block of all color components (luma Y and possibly chroma Cb and chroma Cr). A slice is an integer number of basic coding units such as HEVC coding tree units or H.264 macroblock units. A slice may consist of a complete picture as well as part thereof. Each slice may include one or more slice segments.

In the following, the word "reconstructed" and "decoded" can be used interchangeably. Usually but not necessarily "reconstructed" is used on the encoder side while "decoded" is used on the decoder side. It should be noted that the term "decoded" or "reconstructed" may mean that a bitstream is partially "decoded" or "reconstructed," for example, the signals obtained after deblocking filtering but before SAO filtering, and the reconstructed samples may be different from the final decoded output that is used for display. We may also use the terms "image," "picture," and "frame" interchangeably.

Various embodiments are described with respect to the HEVC standard. However, the present embodiments are not limited to HEVC, and can be applied to other standards, recommendations, and extensions thereof, including for example HEVC or HEVC extensions like Format Range (REXt), Scalability (SHVC), Multi-View (MV-HEVC) Extensions and future video coding standard developed by JVET (Joint Video Experts Team). The various embodiments are described with respect to the encoding/decoding of a picture block. They may be applied to encode/decode a whole picture or a whole sequence of pictures.

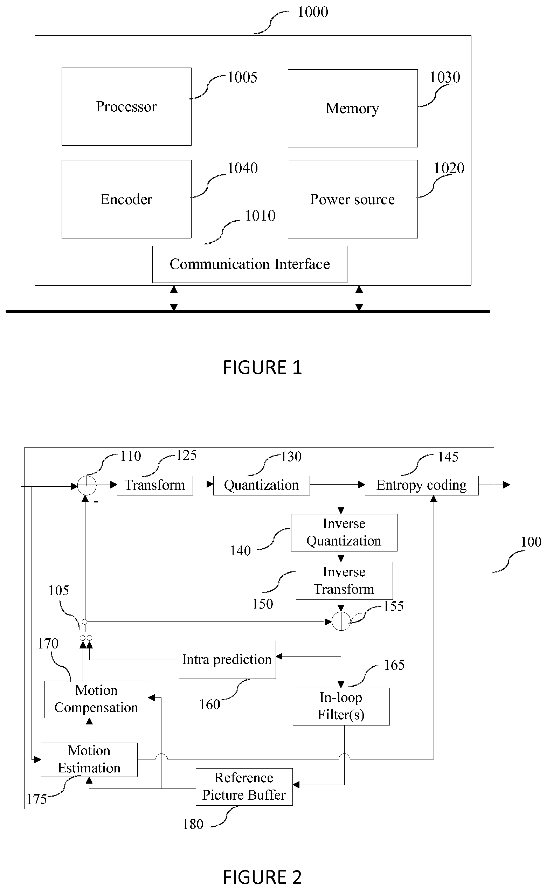

**Figure 1** represents an exemplary architecture of a transmitter 1000 configured to encode a picture in a bitstream according to a specific and non-limiting embodiment.

The transmitter 1000 comprises one or more processor(s) 1005, which could comprise, for example, a CPU, a GPU and/or a DSP (English acronym of Digital Signal Processor), along with internal memory 1030 (e.g. RAM, ROM, and/or EPROM). The transmitter 1000 comprises one or more communication interface(s) 1010 (e.g. a keyboard, a mouse, a touchpad, a webcam), each adapted to display output information and/or allow a user to enter commands and/or data; and a power source 1020 which may be external to the transmitter 1000. The transmitter 1000 may also comprise one or more network interface(s) (not shown). Encoder module 1040 represents the module that may be included in a device to perform the coding functions. Additionally, encoder module 1040 may be implemented as a separate element of the transmitter 1000 or may be incorporated within processor(s) 1005 as a combination of hardware and software as known to those skilled in the art.

The picture may be obtained from a source. According to different embodiments, the source can be, but is not limited to:

- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).

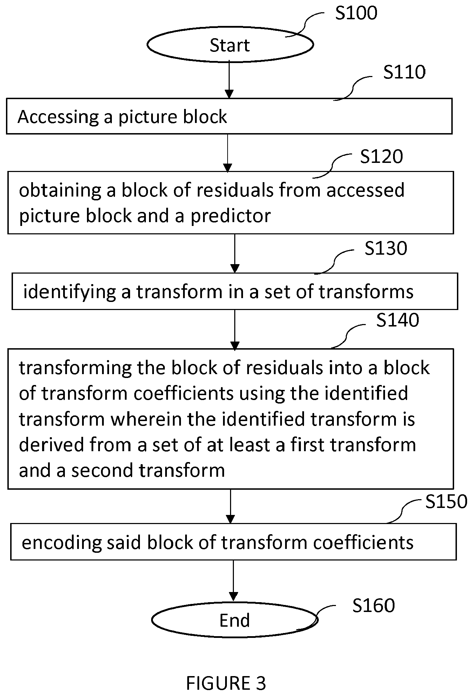

According to different embodiments, the bitstream may be sent to a destination. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network. According to an exemplary and non-limiting embodiment, the transmitter 1000 further comprises a computer program stored in the memory 1030. The computer program comprises instructions which, when executed by the transmitter 1000, in particular by the processor 1005, enable the transmitter 1000 to execute the encoding method described with reference to any of the Figures 3, 4, and 5. According to a variant, the computer program is stored externally to the transmitter 1000 on a non-transitory digital data support, e.g. on an external storage medium such as a HDD, CD-ROM, DVD, a read-only and/or DVD drive and/or a DVD Read/Write drive, all known in the art. The transmitter 1000 thus comprises a mechanism to read the computer program. Further, the transmitter 1000 could access one or more Universal Serial Bus (USB)-type storage devices (e.g., "memory sticks.") through corresponding USB ports (not shown).

According to exemplary and non-limiting embodiments, the transmitter 1000 can be, but is not limited to:

- a mobile device;
- a communication device;
- a game device;
- a tablet (or tablet computer);
- a laptop;
- a still picture camera;
- a video camera;
- an encoding chip or encoding device/apparatus;
- a still picture server; and
- a video server (e.g. a broadcast server, a video-on-demand server or a web server).

**Figure 2** illustrates an exemplary video encoder 100, e.g. an encoder of HEVC type, adapted to execute the encoding method described with reference to any of the Figures 3, 4, and 5. The encoder 100 is an example of a transmitter 1000 or part of such a transmitter 1000.

For coding, a picture is usually partitioned into basic coding units, e.g. into coding tree units (CTU) in HEVC or into macroblock units in H.264. A set of possibly consecutive basic coding units is grouped into a slice. A basic coding unit contains the basic coding blocks of all color components. In HEVC, the smallest coding tree block (CTB) size 16x16 corresponds to a macroblock size as used in previous video coding standards. It will be understood that, although the terms CTU and CTB are used herein to describe encodin/decodin methods and encodin/decodin devices, these methods and apparatus should not be limited by these specific terms that may be worded differently (e.g. macroblock) in other standards such as H.264.

In HEVC coding, a picture is partitioned into CTUs of square shape with a configurable size typically 64x64, 128x128, or 256x256. A CTU is the root of a quad-tree partitioning into 4 square Coding Units (CU) of equal size, i.e. half of the parent block size in width and in height. A quad-tree is a tree in which a parent node can be split into four child nodes, each of which may become parent node for another split into four child nodes. In HEVC, a coding Block (CB) is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU.

In more recent encoding systems such as in Joint Exploration Model (JEM) described in the document JVET-F1001-v3 entitled *"Algorithm Description of Joint Exploration Test Model 6 (JEM 6)",* a CTU is the root of a coding tree partitioning into Coding Units (CU). A coding tree is a tree in which a parent node (usually corresponding to a CU) can be split into child nodes (e.g. into 2, 3 or 4 child nodes), each of which may become parent node for another split into child nodes. In addition to the quad-tree split mode, new split modes (binary tree symmetric split modes, binary tree asymmetric split modes and triple tree split modes) are also defined that increase the total number of possible split modes. The coding tree has a unique root node, e.g. a CTU. A leaf of the coding tree is a terminating node of the tree. Each node of the coding tree represents a CU that may be further split into smaller CUs also named sub-CUs or more generally sub-blocks. Once the partitioning of a CTU into CUs is determined, CUs corresponding to the leaves of the coding tree are encoded. The partitioning of a CTU into CUs and the coding parameters used for encoding each CU (corresponding to a leaf of the coding tree) may be determined on the encoder side through a rate distortion optimization procedure. There is no partitioning of a CB into PBs and TBs, i.e. a CU is made of a single PU and a single TU.

In the following, the term "block" or "picture block" can be used to refer to any one of a CTU, a CU, a PU, a TU, a CB, a PB and a TB. In addition, the term "block" or "picture block" can be used to refer to a macroblock, a partition and a sub-block as specified in H.264/AVC or in other video coding standards, and more generally to refer to an array of samples of numerous sizes.

Back to figure 2, in the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Residuals are calculated by subtracting (110) a predicted block (also known as a predictor) from the original picture block.

CUs in intra mode are predicted from reconstructed neighboring samples, e.g. within the same slice. A set of 35 intra prediction modes is available in HEVC, including a DC, a planar, and 33 angular prediction modes. The intra prediction reference may thus be reconstructed from the row and column adjacent to the current block. CUs in inter mode are predicted from reconstructed samples of a reference picture stored in a reference picture buffer (180).

The residuals are transformed (125) into transform coefficients, also sometimes denoted as residual coefficients. In former video compression schemes, e.g. in HEVC, DCT-II is most often used. In more recent video compression schemes, a new transform scheme is disclosed that uses multiple selected transforms from the DCT/DST families other than the current transforms (i.e. DCT-II and 4x4 DST VII) in HEVC. The newly introduced transforms are DST-VII, DCT-VIII, DST-I and DCT-V. Table 1 shows the basis functions of the newly introduced DST/DCT. This set includes a transform DCT-VIII with a decreasing lowest frequency basis function, a transform DST-VII with an increasing lowest frequency basis function, a transform DCT-V with a quasi-constant lowest frequency basis function and a transform DST-VII with a centrally oriented lowest basis function. Other transforms with an increasing basis functions are DST-III, DST-IV and DST-VIII. The lowest frequency basis functions are the most important ones, since the typical residual signals are encoded by the first few coefficients.

Table 1

| Transform Type | Basis function $T_i(j)$, $i,j=0, 1,..., N$-1 |
|---|---|
| DCT-II | $$T_i(j) = \omega_0 \cdot \sqrt{\frac{2}{N}} \cdot \cos\left(\frac{\pi \cdot i \cdot (2j+1)}{2N}\right)$$ where $$\omega_0 = \begin{cases} \sqrt{\frac{2}{N}} & i = 0 \\ 1 & i \neq 0 \end{cases}$$ |

(continued)

| Transform Type | Basis function $T_i(j)$, $i,j=0, 1,..., N\text{-}1$ |
|---|---|
| DCT-V | $$T_i(j) = \omega_0 \cdot \omega_1 \cdot \sqrt{\frac{2}{2N-1}} \cdot \cos\left(\frac{2\pi \cdot i \cdot j}{2N-1}\right),$$ where $$\omega_0 = \begin{cases} \sqrt{\frac{2}{N}} & i = 0 \\ 1 & i \neq 0 \end{cases}, \omega_1 = \begin{cases} \sqrt{\frac{2}{N}} & j = 0 \\ 1 & j \neq 0 \end{cases}$$ |
| DCT-VIII | $$T_i(j) = \sqrt{\frac{4}{2N+1}} \cdot \cos\left(\frac{\pi \cdot (2i+1) \cdot (2j+1)}{4N+2}\right)$$ |
| DST-I | $$T_i(j) = \sqrt{\frac{2}{N+1}} \cdot \sin\left(\frac{\pi \cdot (i+1) \cdot (j+1)}{N+1}\right)$$ |
| DST-VII | $$T_i(j) = \sqrt{\frac{4}{2N+1}} \cdot \sin\left(\frac{\pi \cdot (2i+1) \cdot (j+1)}{2N+1}\right)$$ |

Adding these transforms increases the encoder and decoder complexity and memory requirement. Indeed, the implementation of the transform process is achieved either by specific fast implementations, each one being specific to each transform type and block size, or by matrix multiplications which require loading forward and inverse transform matrices for each transform type and block size. The transforms of Table 1 have the following properties (more details are given in the Annex section):

1. DCT-VIII is the reverse of DST-VII with some appropriate sign change;
2. DST-II is obtained from DCT-II by appropriate sign changing and then reversing;
3. The inverse of DST-VII is DST-VI;
4. DCT-VIII is self-inverse;
5. DCT-V basis functions are very similar to those of DCT-II.

For a vector of N elements, its reverse is achieved by scanning it from its end to its beginning. Mathematically speaking, for a vector A(i), i ∈ [0;N-1], the vector B(i) = A(N-1-i) is the reverse of A(i). According to an embodiment, these properties are used to decrease the number of additional transforms to be implemented, while preserving the coding efficiency at least partially. In a specific embodiment, the DCT-VIII is used as the single additional transform. In a variant, two additional transforms. As a result, the number of additional transforms is 1 or 2 while JEM design uses 4 additional transforms.

The transform coefficients are then quantized (130). The quantized transform coefficients, as well as motion vectors and other syntax elements, are entropy coded (145) to output a bitstream. The encoder may also skip the transform or bypass both transform and quantization, i.e., the residual is coded directly without the application of the transform or quantization processes. In direct PCM coding, no prediction is applied and the coding unit samples are directly coded into the bitstream.

The entropy coding may be, e.g., Context Adaptive Binary Arithmetic Coding (CABAC), Context Adaptive Variable Length Coding (CAVLC), Huffman, arithmetic, exp-Golomb, etc. CABAC is a method of entropy coding first introduced in H.264 and also used in HEVC. CABAC involves binarization, context modeling and binary arithmetic coding. Binarization maps the syntax elements to binary symbols (bins). Context modeling determines the probability of each regularly coded bin (i.e. non-bypassed) based on some specific context. Finally, binary arithmetic coding compresses the bins to bits according to the determined probability.

The encoder comprises a decoding loop and thus decodes an encoded block to provide a reference for further predictions. The quantized transform coefficients are de-quantized (140) and inverse transformed (150) to decode residuals. A picture block is reconstructed by combining (155) the decoded residuals and the predicted block. An in-loop filter (165) is applied to the reconstructed picture, for example, to perform deblocking/SAO (Sample Adaptive Offset) filtering to reduce coding artifacts. The filtered picture may be stored in a reference picture buffer (180) and used as reference for other pictures.

**Figure 3** represents a flowchart of a method for encoding a picture block in a bitstream according to a specific and non-limiting embodiment.

The method starts at step S100. At step S110, a transmitter 1000, e.g. such as the encoder 100, accesses a picture block. At step S120, a block of residuals is obtained, e.g. by subtracting a predictor from the accessed picture block. At step S130, the transmitter 1000 identifies a transform in a first set of several transforms. In a specific embodiment, the first set of transforms comprises the following transforms: DCT-II, DVT-V, DCT-VIII, DST-I and DST-VII as in JEM. The transform may be selected by rate-distortion optimization and identified by an index.

At step S140, the block of residuals is transformed into a block of transform coefficients using the identified transform wherein the identified transform is derived from a second set of at least a first transform and a second transform. The second set is a sub-set of the first set. In an exemplary embodiment, the second set comprises two transforms, e.g. forward DCT-II and a single additional transform such as the forward DCT-VIII. In a variant, the second set comprises the following transforms: forward DCT-II and forward DCT-IV. The forward DCT-IV has a decreasing basis function at lowest frequency. In a variant, the second set comprises three transforms, e.g. the forward DCT-II and two additional transforms, e.g. DCT-V and DCT-VIII. In the case where the identified transform is not in the second set, i.e. the identified transform is different from the transforms in the second set, the identified transform is reproduced by the following additional steps: reversing the order of input data (residuals or transform coefficients) and changing their signs according to their index in the block or in a line (respectively column of the block).

At step S150, the transmitter 1000 encodes the block of transform coefficients in a bitstream. Encoding of transform coefficients usually comprises quantizing and entropy coding.

The method ends at step S160.

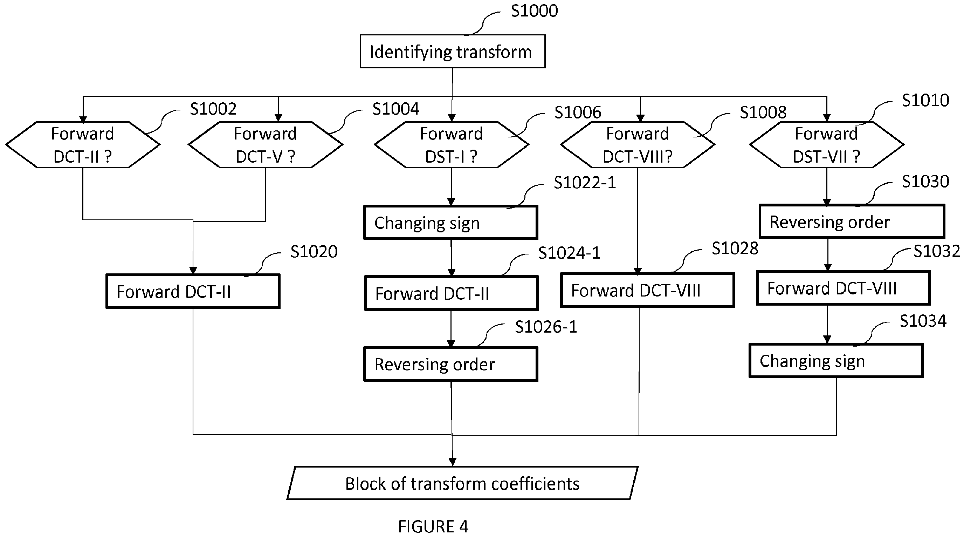

**Figure 4** represents a flowchart of a method for obtaining a block of transform coefficients from a block of residuals according to an exemplary embodiment. In this embodiment, a single transform is used (e.g. forward DCT-VIII) to transform a block of residuals in addition to the classical forward DCT-II. The other transforms of the first set are either replaced by the single additional transform or the classical forward DCT-II or derived from these two transforms by appropriate order reversing of input data and sign change. The method of Figure 4 may be applied successively on the lines of a block and on the column of the block in case of separable transforms or on the whole block in case of non-separable transforms.

At step S1000, a transform is identified in the first set of several transforms. In the case where the forward DCT-II (S1002) or the forward DCT-V (S1004) is identified, the forward DCT-II is applied on the block of residuals (S1020). The forward DCT-V is advantageously replaced (S1020) by the forward DCT-II since their basis functions are similar. In the case where the forward DST-I (S1006) is identified, signs of residuals in the block of residuals are changed (S1022-1). More precisely, each residual in the block of residuals is multiplied by $(-1)^j$, where j is the index of the residual in a line (respectively column) of the residual block in case where S 1022-1 is applied on a line (respectively column). In a variant, j is the index of the residual in the residual block. In this latter case, the block may be scanned in a specific order (e.g. in a raster scan order) to obtain a vector of residuals, j being the index of the residual in the obtained vector. The forward DCT-II is then applied (S1024-1) on the block of residuals after sign change to obtain a block of transform coefficients. The order of transform coefficients in the block of transform coefficient is then reversed (S 1026-1). DST-I is thus replaced by DST-II which is derived from DCT-II.

In the case where the forward DCT-VIII (S 1008) is identified, the forward DCT-VIII is applied on the block of residuals (S 1028). Finally, in the case where the forward DST-VII (S 1010) is identified, the order of residuals in the block of residuals is reversed (S 1030). The forward DCT-VIII is then applied (S 1032) on the block of residuals after order reversing to obtain a block of transform coefficients. Signs of transform coefficients are changed (S1034). More precisely, each transform coefficient in the block is multiplied by $(-1)^i$, where i is the order of the frequency. More precisely, the sign of the odd ordered transform coefficients is changed.

Usually forward transforms are used on the encoder side while their corresponding inverse versions are used on the decoder side. Note that some of the selected transform matrices are symmetric and thus self-inverse, that is, for an orthonormal transform matrix A, the following equalities hold:

$$A^{-1} = A^T, \ AA^T = I$$

where $I$ is the identity matrix and $T$ is the transpose operator. If $A$ is symmetric, then $A = A^T = A^{-1}$. This means that the inverse transform can be computed by using forward transform matrix, and no extra matrix for inverse transform needs to be stored. DCT-VIII is self-inverse.

According to the present embodiment, a single transform needs to be explicitly implemented in addition to the forward DCT-II while in JEM four additional transforms needs to be explicitly implemented. In a variant, two transforms are explicitly implemented in addition to the forward DCT-II. Therefore, the complexity and memory requirement are decreased while the coding efficiency is maintained since the other additional transforms of JEM are derived from the transforms of the second set by simple operations (sign change and order reversing).

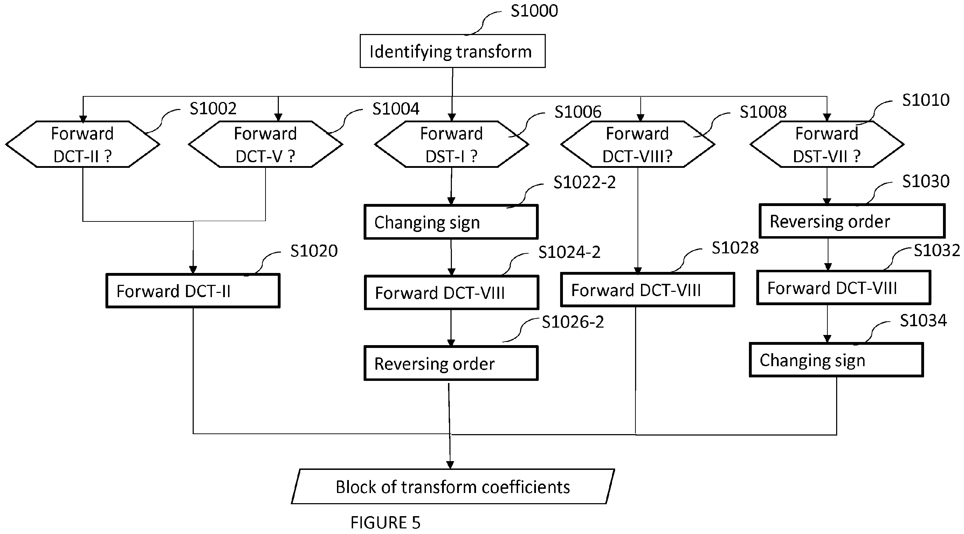

**Figure 5** represents a flowchart of a method for obtaining a block of transform coefficients from a block of residuals according to another exemplary embodiment. In this embodiment, a single transform is used (e.g. forward DCT-VIII) to transform a block of residuals in addition to the classical forward DCT-II. The other transforms of the first set are either replaced by the single additional transform or the classical forward DCT-II or derived from these two transforms by appropriate order reversing of input data and sign change. The steps of Figure 4 identical to the steps of Figure 3 are identified with the same numerical reference and are not further disclosed.

The difference with the embodiment of Figure 3 is for the case where the forward DST-I (S1006) is identified. In the case where the forward DST-I (S1006) is identified, signs of residuals in the block of residuals are changed (S1022-2). More precisely, each residual in the block of residuals is multiplied by $(-1)^j$, where j is the index of the residual in a line (respectively column) of the residual block in case where S 1022-2 is applied on a line (respectively column). More precisely, the sign of the odd ordered transform coefficients is changed. In a variant, j is the index of the residual in the residual block. In this latter case, the block may be scanned in a specific order (e.g. in a raster scan order) to obtain a vector of residuals, j being the index of the residual in the obtained vector. The forward DCT-VIII is then applied (S 1024-2) on the block of residuals after sign change to obtain a block of transform coefficients. The order of transform coefficients in the block of transform coefficient is then reversed (S 1026-2). DST-I is replaced by DST-VI which is derived from DCT-VIII.

Other transforms than the forward DCT-VIII may be used in addition to the classical forward DCT-II to transform a block of residuals. For example, DCT-IV may be used. This transform, like DCT-VIII, has a decreasing basis function at lowest frequency. The reversed DCT-IV transform is DST-IV, which is like DST-VII.

More generally, some transforms can obtained from others by simple operations of sign changing and reverse ordering. For a transform T, two matrices $R$ and $S$ are defined as a reverse order matrix and sign change matrix respectively, such that

$$R(i,j) = \begin{cases} 1 & if\ i = N - 1 - i \\ 0 & else \end{cases}$$

$$S(i,j) = \begin{cases} -1^i & if\ i = j \\ 0 & else \end{cases}$$

where $i,j \in (0, N - 1)$.

As an example, let T1 and T2 be the transform matrices of DST-VII and DCT-VIII respectively. The following relation holds: T2=SxT1xR. In other words, to compute the DST-VII transform from the existing DCT-VIII transform, the following procedure is performed: reverse the order of the input data, transform the data using the existing DCT-VIII algorithm, and then change the sign of the odd ordered coefficients.

Table 2 provides a summary about all possible transforms that can be obtained from a base transform using $R$ and $D$. $T^t$ is the transpose of $T$, which is the inverse of the transform. As used herein, regular numbers are used interchangeably with roman numerals for brevity. Therefore, for example, DCT-II, DCT-V, DCT-VIII, DST-I, DST-IV and DST-VII are also referred respectively as DCT2, DCT5, DCT8, DST1, DST4 and DST7.

Table 2

| Base Transform T | $R \times T \times S$ | $S \times T \times R$ | $R \times T^t \times S$ | $S \times T^t \times R$ |
|---|---|---|---|---|
| DCT1 | DCT1 | DCT1 | DCT1 | DCT1 |
| DCT2 | DST2 | DCT2 | DCT3 | DST3 |
| DCT3 | DCT3 | DST3 | DST2 | DCT2 |
| DCT4 | DST4 | DST4 | DST4 | DST4 |
| DCT5 | DCT7 | DCT6 | DCT7 | DCT6 |
| DCT6 | DST8 | DCT5 | DCT5 | DST8 |
| DCT7 | DCT5 | DST8 | DST8 | DCT5 |

(continued)

| Base Transform T | $R \times T \times S$ | $S \times T \times R$ | $R \times T^t \times S$ | $S \times T^t \times R$ |
|---|---|---|---|---|
| DCT8 | DST6 | DST7 | DST6 | DST7 |
| DST1 | DST1 | DST1 | DST1 | DST1 |
| DST2 | DCT2 | DST2 | DST3 | DCT3 |
| DST3 | DST3 | DCT3 | DCT2 | DST2 |
| DST4 | DCT4 | DCT4 | DCT4 | DCT4 |
| DST5 | DST7 | DST6 | DST7 | DST6 |
| DST6 | DCT8 | DST5 | DST5 | DCT8 |
| DST7 | DST5 | DCT8 | DCT8 | DST5 |
| DST8 | DCT6 | DCT7 | DCT6 | DCT7 |

All the considered base transforms have a decreasing basis function at lowest frequency, while the first derived transforms have an increasing one. The second derived transform is either with quasi-constant basis function or centrally oriented one. The centrally oriented transform can be either obtained from DCT-VIII or DCT-II. From those transforms, either DST-VI or DST-II can be obtained (Table 2), where both are very similar to centrally oriented transform of DST-I. Finally, the quasi constant transform of DCT-V can be replaced by DCT-II, which has a constant lowest frequency basis function. In a specific embodiment, a single additional transform, namely DCT-VIII, is implemented in addition to the existing DCT-II. DST-VII is directly computed by reverse ordering and sign changing, while DST-I is either replaced by DST-II (computed from DCT-II) or DST-VI (computed from) DST-VIII.

In a specific embodiment, the choice of the base transform(s) to be used in addition to the classical DCT-II is dependent of the block size.

For example, for small blocks, transforms with some discontinuities are preferred to well-match the characteristics of the residual signals. On the other hand, for large blocks, transforms which are smooth are preferred. As an example, DCT-VII is advantageously used as a base transform for small blocks (e.g. 4xN or Nx4). DST-VIII and DCT-V are thus derived from DCT-VII as indicated in Table 2. DCT-VIII or DCT IV are advantageously used as a base transform for larger blocks.

This embodiment does not require adding extra memory or hardware/software architecture.

In a variant, the number of additional transforms depends on the block size. As an example, up to a block size of 8, two additional transforms are used in addition to DCT-II, e.g. DCT-V and DCT-VIII, and for block sizes' larger than 8 a single additional transform is used, e.g. DCT-VIII. In this latter case, DCT-V is replaced by DCT-II.

The various embodiments allow reducing the number of additional transforms while being efficient. These embodiments thus simplify the transform design and consequently both the encoder and decoder hardware/software design. In the case where the transform design is implemented by matrix multiplications, the solution requires adding a single transform or two transforms (e.g. per transform size) to emulate the original JVET additional transforms {DCT-V, DST-I, DST-VII, DCT-VIII}. **Error! Reference source not found**. provides a summary of each number of transform matrices or hardware architecture needed for each transform size for both the proposed method and the JVET's one. Note that some transforms require storing 2 matrices as they are not self-inverse. For self-inverse transforms only one single matrix needs to be stored.

Table 3

| Transform Type (proposed) | Number of matrices or hardware architecture | Transform Type (JVET) | Number of matrices or hardware architectures |
|---|---|---|---|
| DCT-VIII | 1 | DST-VII | 2 |
| | | DCT-VIII | 1 |
| | | DST-I | 1 |
| | | DCT-V | 1 |
| **Sum** | **1** | **Sum** | **5** |

In addition, JVET supports a block sizes from 4 to 128 for the multiple transform up to 64. If matrix multiplication is used for implementing the transforms, this requires loading 21840 matrix coefficients (see table 4). For a 2 bytes representation, this requires 218.4 KBytes (2*5*21840) for JVET, whereas the proposed method requires 43.68 KBytes (2*1*21840). Thus, the proposed solution provides 174.72 KBytes reduction. This reduction may even be more important when considering further transforms sizes that might be used in future standards.

Table 4

| Transform block size | Number of transform matrix elements |
|---|---|
| 4 | 16 |
| 8 | 64 |
| 16 | 256 |
| 32 | 1024 |
| 64 | 4096 |
| 128 | 16384 |
| **Sum** | **21840** |

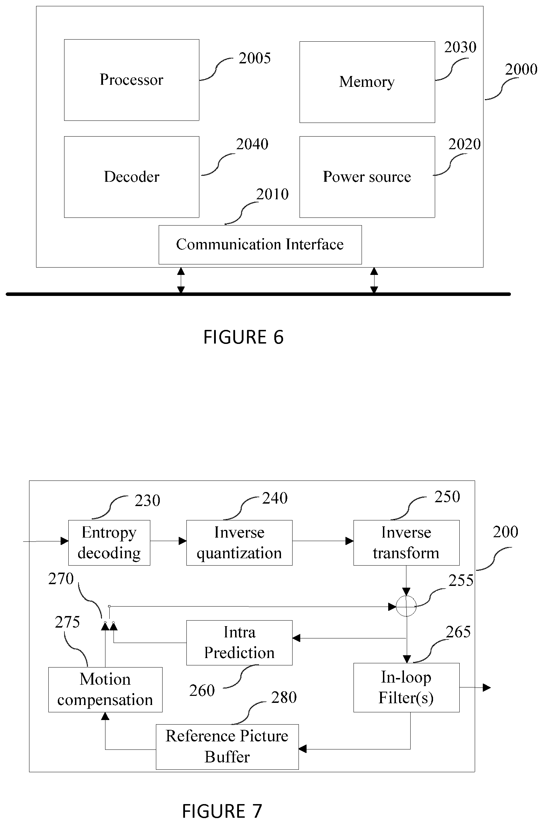

**Figure 6** represents an exemplary architecture of a receiver 2000 configured to decode a picture from a bitstream to obtain a decoded picture according to a specific and non-limiting embodiment.

The receiver 2000 comprises one or more processor(s) 2005, which could comprise, for example, a CPU, a GPU and/or a DSP (English acronym of Digital Signal Processor), along with internal memory 2030 (e.g. RAM, ROM and/or EPROM). The receiver 2000 comprises one or more communication interface(s) 2010 (e.g. a keyboard, a mouse, a touchpad, a webcam), each adapted to display output information and/or allow a user to enter commands and/or data (e.g. the decoded picture); and a power source 2020 which may be external to the receiver 2000. The receiver 2000 may also comprise one or more network interface(s) (not shown). The decoder module 2040 represents the module that may be included in a device to perform the decoding functions. Additionally, the decoder module 2040 may be implemented as a separate element of the receiver 2000 or may be incorporated within processor(s) 2005 as a combination of hardware and software as known to those skilled in the art.

The bitstream may be obtained from a source. According to different embodiments, the source can be, but is not limited to:

- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the decoded picture may be sent to a destination, e.g. a display device. As an example, the decoded picture is stored in a remote or in a local memory, e.g. a video memory or a RAM, a hard disk. In a variant, the decoded picture is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

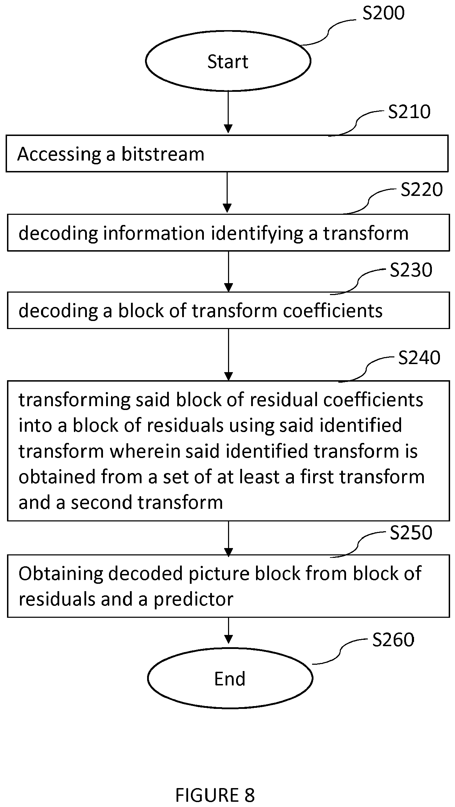

According to a specific and non-limiting embodiment, the receiver 2000 further comprises a computer program stored in the memory 2030. The computer program comprises instructions which, when executed by the receiver 2000, in particular by the processor 2005, enable the receiver to execute the decoding method described with reference to any one of Figures 8, 9, and 10. According to a variant, the computer program is stored externally to the receiver 2000 on a non-transitory digital data support, e.g. on an external storage medium such as a HDD, CD-ROM, DVD, a read-only and/or DVD drive and/or a DVD Read/Write drive, all known in the art. The receiver 2000 thus comprises a mechanism to read the computer program. Further, the receiver 2000 could access one or more Universal Serial Bus (USB)-type storage devices (e.g., "memory sticks.") through corresponding USB ports (not shown).

According to exemplary and non-limiting embodiments, the receiver 2000 can be, but is not limited to:

- a mobile device;
- a communication device;

- a game device;
- a set top box;
- a TV set;
- a tablet (or tablet computer);
- a laptop;
- a video player, e.g. a Blu-ray player, a DVD player;
- a display; and
- a decoding chip or decoding device/apparatus.

**Figure 7** illustrates a block diagram of an exemplary video decoder 200, e.g. of the HEVC type, adapted to execute the decoding method with reference to any one of Figures 8, 9, and 10. The video decoder 200 is an example of a receiver 2000 or part of such a receiver 2000. In the exemplary decoder 200, a bitstream is decoded by the decoder elements as described below. Video decoder 200 generally performs a decoding pass reciprocal to the encoding pass as described in Figure 2, which performs video decoding as part of encoding video data.

In particular, the input of the decoder includes a bitstream, which may be generated by the video encoder 100. The bitstream is first entropy decoded (230) to obtain transform coefficients, motion vectors, and other coded information. The transform coefficients are de-quantized (240) and inverse transformed (250) to decode residuals. The decoded residuals are then combined (255) with a predicted block (also known as a predictor) to obtain a decoded/reconstructed picture block. The predicted block may be obtained (270) from intra prediction (260) or motion-compensated prediction (i.e., inter prediction) (275). As described above, AMVP and merge mode techniques may be used during motion compensation, which may use interpolation filters to calculate interpolated values for sub-integer samples of a reference block. An in-loop filter (265) is applied to the reconstructed picture. The in-loop filter may comprise a deblocking filter and a SAO filter. The filtered picture is stored at a reference picture buffer (280).

**Figure 8** represents a flowchart of a method for decoding a picture block from a bitstream according to a specific and non-limiting embodiment.
The method starts at step S200. At step S210, a receiver 2000 such as the decoder 200 accesses a bitstream. At step S220, the receiver decodes information identifying a transform from the accessed bitstream. The information identifies a transform in a first set of transforms. In a specific embodiment, the set of transforms comprises the following transforms: DCT-II, DVT-V, DCT-VIII, DST-I and DST-VII as in JEM. The transform may be identified by an index decoded from the bitstream.
At step S230, a block of transform coefficients is decoded from the accessed bitstream. Decoding a block of transform coefficients usually comprises entropy decoding and inverse quantization.
At step S240, the block of transform coefficients is transformed into a block of residuals using the identified transform wherein the identified transform is derived from a second set of at least a first transform and a second transform. The second set is a sub-set of the first set. It comprises at least a first transform and a second transform. In an exemplary embodiment, the second set comprises the following transforms: Inverse DCT-II and forward DCT-VIII. Since the DCT-VIII is a self-inverse transform, there is no need to use an inverse DCT-VIII on the decoder side. Thus, forward DCT-VIII is also used in the decoder.
In a variant, the second set comprises the following transforms: inverse DCT-II and forward DCT-IV. In another variant, the second set comprises three transforms, e.g. the inverse DCT-II and two additional transforms, e.g. DCT-V and DCT-VIII. In the case where the identified transform is not in the second set, i.e. the identified transform is different from the transforms in the second set, the identified transform is reproduced by additional steps such as reversing the order of input data (residuals or transform coefficients) and changing their signs according to their position in the block.

At step S250, a decoded picture block is obtained for example by adding a predictor to the block of residuals. The method ends at step S260.

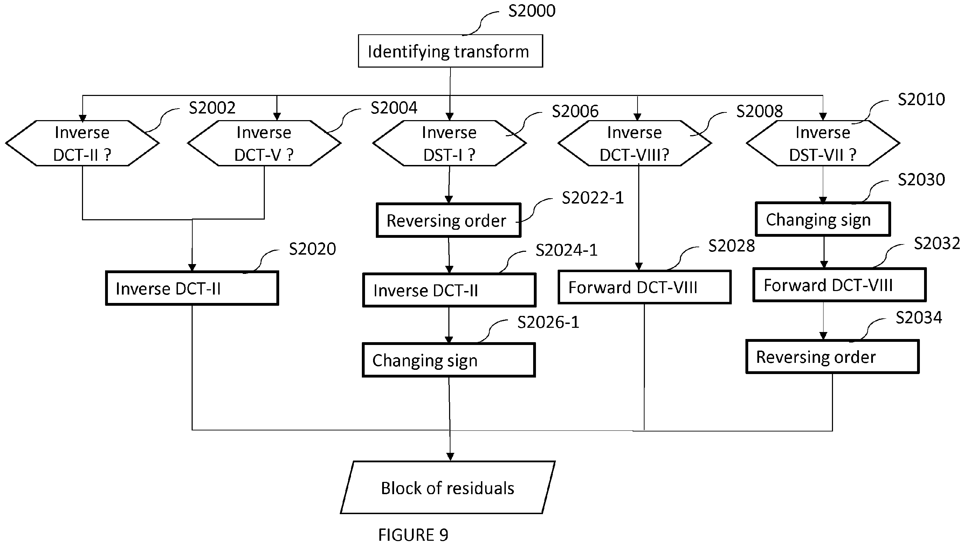

**Figure 9** represents a flowchart of a method for obtaining a block of residuals from a block of transform coefficients according to an exemplary embodiment. In this embodiment, a single transform is used (e.g. forward DCT-VIII) to transform a block of transform coefficients in addition to the classical Inverse DCT-II. The other transforms of the first set are either replaced by the single additional transform or the classical Inverse DCT-II or derived from these two transforms by appropriate order's reversing of input data and sign change.

At step S2000, a transform is identified in the first set of several transforms. In the case where the Inverse DCT-II (S2002) or the inverse DCT-V (S1004) is identified, the inverse DCT-II is applied on the block of transform coefficients (S2020). The inverse DCT-V is advantageously replaced (S2020) by the inverse DCT-II since their basis functions are similar. In the case where the inverse DST-I (S2006) is identified, the order of residuals in the block of residuals is reversed (S2022-1). The inverse DCT-II is then applied (S1024-1) on the block of residuals after order reversing to obtain a block of transform coefficients. Signs of transform coefficients are changed (S2026-1). More precisely, each transform coefficient in the block is multiplied by $(-1)^i$, where i is the order of the frequency. DST-I is replaced by DST-II which is derived from DCT-II.

In the case where the inverse DCT-VIII (S2008) is identified, the forward DCT-VIII is applied on the block of transform coefficients (S2028). Usually forward transforms are used on the encoder side while their corresponding inverse versions are used on the decoder side. However, DCT-VIII is self-inverse and thus forward DCT-VIII may be used instead of inverse DCT-VIII. Finally, in the case where the inverse DST-VII (S2010) is identified, the signs of transform coefficients are changed (S2030). More precisely, each transform coefficient in the block is multiplied by $(-1)^i$. The forward DCT-VIII is then applied (S2032) on the block of transform coefficients after sign change to obtain a block of residuals. The order of the residuals in the residual block are then reversed (S2034).

According to the present embodiment, a single transform needs to be explicitly implemented in addition to the inverse DCT-II while in JEM four additional transforms needs to be explicitly implemented. Therefore, the complexity and memory requirement are decreased while the coding efficiency is maintained since the other additional transforms of JEM are derived from the transforms of the second set by simple operations (sign change and order reversing).

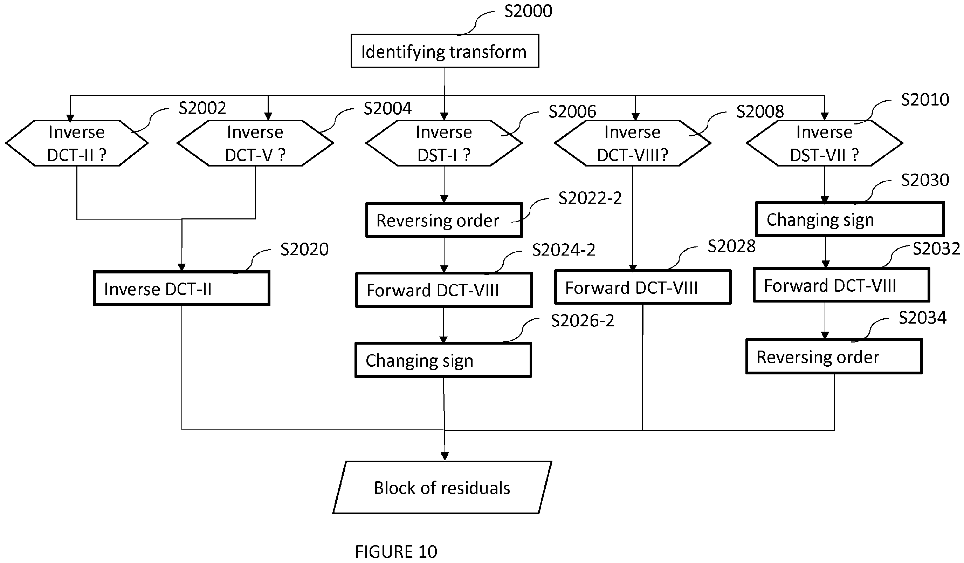

**Figure 10** represents a flowchart of a method for obtaining a block of residuals from a block of transform coefficients according to another exemplary embodiment. In this embodiment, a single transform is used (e.g. forward DCT-VIII) to transform a block of residual in addition to the classical inverse DCT-II. The other transforms of the first set are either replaced by the single additional transform or the classical forward DCT-II or derived from these two transforms by appropriate order's reversing of input data and sign change. The steps of Figure 10 identical to the steps of Figure 9 are identified with the same numerical reference and are not further disclosed.

The difference with the embodiment of Figure 9 is for the case where the inverse DST-I (S2006) is identified. In this case, the order of residuals in the block of residuals is reversed (S2022-2). The inverse DCT-VIII is then applied (S2024-2) on the block of residuals after order reversing to obtain a block of transform coefficients. Signs of transform coefficients are changed (S2026-2). More precisely, each transform coefficient in the block is multiplied by $(-1)^i$, where i is the order of the frequency.

DST-I is replaced by DST-VI which is derived from DCT-VIII.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

# ANNEX

Mathematically, the following properties hold:

**1. DCT-VIII is the reverse of DST-VII with some appropriate sign change.**

By reverse, we mean reversing the index $j$, which is from 0 to N-1, by a new index $l = N - 1 - j$. For DST-VII, the basis functions are:

$$T_i(j) = \sqrt{\frac{4}{2N + 1}} \cdot \sin\left(\frac{\pi \cdot (2i + 1) \cdot (j + 1)}{2N + 1}\right)$$

Now, by replacing $j$ by $l$

$$T_i(l) = \sqrt{\frac{4}{2N + 1}} \cdot \sin\left(\frac{\pi \cdot (2i + 1) \cdot (N - 1 - l + 1)}{2N + 1}\right)$$

$$= \sqrt{\frac{4}{2N + 1}} \cdot \sin\left(\frac{\pi \cdot (2i + 1) \cdot (N + \frac{1}{2} - l - \frac{1}{2})}{2N + 1}\right)$$

$$= \sqrt{\frac{4}{2N + 1}} \cdot \sin\left(\frac{\pi \cdot (2i + 1) \cdot \left(N + \frac{1}{2}\right)}{2N + 1} - \frac{\pi \cdot (2i + 1) \cdot (l + \frac{1}{2})}{2N + 1}\right)$$

$$= \sqrt{\frac{4}{2N + 1}} \cdot \sin\left(\frac{1}{2}\pi \cdot (2i + 1) - \frac{\pi \cdot (2i + 1) \cdot (l + \frac{1}{2})}{2N + 1}\right)$$

Since $\sin(a - b) = \sin(a)\cos(b) - \cos(a)\sin(b)$, then

$$T_i(l) = \sqrt{\frac{4}{2N + 1}}$$

$$\cdot \left\{ \sin\left(\frac{1}{2}\pi \cdot (2i + 1)\right) \cos\left(\frac{\pi \cdot (2i + 1) \cdot (l + \frac{1}{2})}{2N + 1}\right) \right.$$

$$\left. - \cos\left(\frac{1}{2}\pi \cdot (2i + 1)\right) \sin\left(\frac{\pi \cdot (2i + 1) \cdot (l + \frac{1}{2})}{2N + 1}\right) \right\}$$

Note that $\sin\left(\frac{1}{2}\pi \cdot (2i + 1)\right) = -1^i$ and $\cos\left(\frac{1}{2}\pi \cdot (2i + 1)\right) = 0$

$$T_i(l) = \sqrt{\frac{4}{2N+1}} \cdot (-1)^i \cdot \cos\left(\frac{\pi \cdot (2i+1) \cdot (l+\frac{1}{2})}{2N+1}\right)$$

$$= \sqrt{\frac{4}{2N+1}} \cdot (-1)^i \cdot \cos\left(\frac{\pi \cdot (2i+1) \cdot (2l+1)}{4N+2}\right)$$

Which is exactly the form of DCT-VIII.

**2. DST-II is the reverse of DCT-II with some appropriate sign change.**

The basis functions for DST-II is given by:

$$T_i(j) = \varepsilon_i \cdot \sqrt{\frac{2}{N}} \cdot \sin\left(\frac{\pi \cdot (i+1) \cdot (j+\frac{1}{2})}{N}\right)$$

$$i, j \in (0, N-1)$$

$$\varepsilon_i = \begin{cases} \sqrt{\frac{1}{2}} & i = N-1 \\ 1 & else \end{cases}$$

This form can be obtained from DCT-II, where:

$$T_{N-1-i}(j) = (-1)^j \cdot \delta_i \cdot \sqrt{\frac{2}{N}} \cdot \cos\left(\frac{\pi \cdot (i) \cdot (j+\frac{1}{2})}{N}\right)$$

$$\delta_i = \begin{cases} \sqrt{\frac{1}{2}} & i = 0 \\ 1 & else \end{cases}$$

In other words, DST-II can be obtained from DCT-II by first negating input data with odd indexes, perform DCT-II, and then reverse the order of the coefficients.

**3. The inverse of DST-VII is DST-VI:**

It should be noted that the Discrete Trigonometric transforms are orthogonal transforms. With this property, the inverse transform matrix is obtained by

transposing the forward transform matrix. For DST-VI, the basis functions are given by the following mathematical form:

$$\text{DST-VI: } T_i(j) = \sqrt{\frac{4}{2N+1}} \cdot \sin\left(\frac{\pi \cdot (i+1) \cdot (2j+1)}{2N+1}\right)$$

By swapping $i$ and $j$ we can obtain DST-VII from DST-VI and vice-versa.

On the other hand, DST-VI can be obtained from DCT-VII using this formula

$$\text{DST-VI: } T_i(j) = \sqrt{\frac{4}{2N+1}} \cdot (-1)^l \cdot \cos\left(\frac{\pi \cdot (2i+1) \cdot (2l+1)}{4N+2}\right)$$

Where $l = N - 1 - j$

**Claims**

1. A decoding method comprising :

   - decoding (S220) information identifying a transform in a set of transforms;
   - decoding (S230) a block of transform coefficients;
   - transforming (S240) said block of transform coefficients into a block of residuals using said identified transform;

   wherein said identified transform is derived from a set of at least a first transform and a second transform, wherein said identified transform is different from said first and second transforms.

2. The decoding method of claim 1, wherein said identified transform is obtained from a set of at least a first transform and a second transform by one or more of a sign change operation and an order reverse operation.

3. The decoding method of claim 1 or 2, wherein said first transform is a discrete cosine transform of type-II and said second transform is a discrete cosine transform of type-VIII.

4. The decoding method according to any one of claims 1 to 3, wherein said identified transform being a discrete sine transform of type-I, said identified transform is obtained by:

   - reversing order of transform coefficients of said block of transform coefficients;
   - applying an inverse discrete cosine transform of type-II on said block of transform coefficients after order reversing to obtain a block of residuals; and
   - changing the sign of odd ordered residuals of said block of residuals.

5. The decoding method according to any one of claims 1 to 3, wherein said identified transform being a discrete sine transform of type-VII, said identified transform is obtained by:

   - changing the sign of odd ordered transform coefficients of said block of transform coefficients;
   - applying a forward discrete cosine transform of type-VIII on said block of transform coefficients after sign change to obtain a block of residuals; and
   - reversing order of residuals in said block of residuals.

6. The decoding method according to any one of claims 1 to 3, wherein said identified transform being a discrete sine transform of type-I, said identified transform is obtained by:

   - reversing order of said transform coefficients of said block of transform coefficients;
   - applying a forward discrete cosine transform of type-VIII on said block of transform coefficients after reversing order to obtain a block of residuals; and
   - changing the sign of odd ordered residuals of said block of residuals.

**EP 3 518 542 A1**

7. The decoding method according to any one of claims 1 to 6, wherein said first transform is a discrete cosine transform of type-II and said second transform is a discrete cosine transform of type-IV.

8. An encoding method comprising:

- obtaining (S120) a block of residuals;
- identifying (S130) a transform in a set of transforms;
- transforming (S140) said block of residuals into a block of transform coefficients using said identified transform; and
- encoding (S150) said block of transform coefficients and information identifying a transform in a set of transforms;

wherein said identified transform is derived from a set of at least a first transform and a second transform, wherein said identified transform is different from said first and second transforms.

9. The encoding method of claim 8, wherein said identified transform is obtained from a set of at least a first transform and a second transform by one or more of a sign change operation and an order reverse operation.

10. The encoding method of claim 8 or 9, wherein said first transform is a discrete cosine transform of type-II and said second transform is a discrete cosine transform of type-VIII.

11. The encoding method according to any one of claims 8 to 10, wherein said identified transform being a discrete sine transform of type-I, said identified transform is obtained by:

- changing the sign of odd ordered residuals;
- applying a forward of discrete cosine transform of type-II on said block of residuals after sign change to obtain a block of transform coefficients; and
- reversing order of said transform coefficients in said block of transform coefficients.

12. The encoding method according to any one of claims 8 to 10, wherein said identified transform being a discrete sine transform of type-VII, said identified transform is obtained by:

- reversing order of said residuals in said block of residuals;
- applying a forward discrete cosine transform of type-VIII on said block of residuals after reversing order to obtain a block of transform coefficients; and
- changing the sign of odd ordered transform coefficients.

13. The encoding method according to any one of claims 8 to 10, wherein said identified transform being a discrete sine transform of type-I, said identified transform is obtained by:

- changing the sign of odd ordered residuals;
- applying a forward of discrete cosine transform of type-VIII on said block of residuals after sign change to obtain a block of transform coefficients; and
- reversing order of said transform coefficients in said block of transform coefficients.

14. The encoding method according to any one of claims 8 to 13, wherein said first transform is a discrete cosine transform of type-II and said second transform is a discrete cosine transform of type-IV.

15. A decoding device comprising :

- means for decoding information identifying a transform in a set of transforms;
- means for decoding a block of transform coefficients;
- means for transforming said block of transform coefficients into a block of residuals using said identified transform;

wherein said identified transform is derived from a set of at least a first transform and a second transform, wherein said identified transform is different from said first and second transforms.

16. An encoding device comprising:

   - means for obtaining a block of residuals;
   - means for identifying a transform in a set of transforms;
   - means for transforming said block of residuals into a block of transform coefficients using said identified transform; and
   - means for encoding said block of transform coefficients and information identifying a transform in a set of transforms;

wherein said identified transform is derived from a set of at least a first transform and a second transform, wherein said identified transform is different from said first and second transforms.

1000

```
┌──────────────────────────────────────────────────────────┐
│                                                            │
│  ┌─────────────────┐  1005      ┌─────────────────┐ 1030  │
│  │                 │            │                 │        │
│  │    Processor    │            │     Memory      │        │
│  │                 │            │                 │        │
│  └─────────────────┘            └─────────────────┘        │
│                                                            │
│  ┌─────────────────┐  1040      ┌─────────────────┐ 1020  │
│  │                 │            │                 │        │
│  │     Encoder     │            │  Power source   │        │
│  │                 │            │                 │        │
│  └─────────────────┘  1010      └─────────────────┘        │
│          ┌──────────────────────────────┐                 │
│          │   Communication Interface     │                 │
│          └──────────────────────────────┘                 │
│                     ▲           ▲                          │
└─────────────────────┼───────────┼──────────────────────────┘
                      ▼           ▼
```

FIGURE 1

FIGURE 2

S100

Start

S110

Accessing a picture block

S120

obtaining a block of residuals from accessed
picture block and a predictor

S130

identifying a transform in a set of transforms

S140

transforming the block of residuals into a block
of transform coefficients using the identified
transform wherein the identified transform is
derived from a set of at least a first transform
and a second transform

S150

encoding said block of transform coefficients

End

S160

FIGURE 3

EP 3 518 542 A1

FIGURE 4

FIGURE 5

Processor ⟋ 2005

Memory ⟋ 2030

2000

Decoder ⟋ 2040

Power source ⟋ 2020

2010

Communication Interface

FIGURE 6

Entropy decoding ⟋ 230

Inverse quantization ⟋ 240

Inverse transform ⟋ 250

200

270

255

275

Intra Prediction

265

Motion compensation

260

280

In-loop Filter(s)

Reference Picture Buffer

FIGURE 7

S200

Start

S210

Accessing a bitstream

S220

decoding information identifying a transform

S230

decoding a block of transform coefficients

S240

transforming said block of residual coefficients into a block of residuals using said identified transform wherein said identified transform is obtained from a set of at least a first transform and a second transform

S250

Obtaining decoded picture block from block of residuals and a predictor

S260

End

FIGURE 8

Identifying transform — S2000

Inverse DCT-II ? — S2002

Inverse DCT-V ? — S2004

Inverse DST-I ? — S2006

Inverse DCT-VIII? — S2008

Inverse DST-VII ? — S2010

Inverse DCT-II — S2020

Reversing order — S2022-1

Inverse DCT-II — S2024-1

Changing sign — S2026-1

Forward DCT-VIII — S2028

Changing sign — S2030

Forward DCT-VIII — S2032

Reversing order — S2034

Block of residuals

FIGURE 9

27

FIGURE 10

Identifying transform — S2000

Inverse DST-I ? — S2004

Inverse DCT-II ? — S2002

Inverse DCT-V ? — S2002

Inverse DCT-II — S2020

Reversing order — S2022-2

Forward DCT-VIII — S2024-2

Changing sign — S2026-2

Inverse DCT-VIII? — S2006

Forward DCT-VIII — S2028

Inverse DST-VII ? — S2008

Changing sign — S2030

Forward DCT-VIII — S2032

Reversing order — S2034

Inverse DST-VII ? — S2010

Block of residuals

Europäisches
Patentamt

European
Patent Office

Office européen
des brevets

# EUROPEAN SEARCH REPORT

Application Number

EP 18 30 5085

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REZNIK YURIY A: "Relationship between DCT-II, DCT-VI, and DST-VII transforms", 2013 IEEE INTERNATIONAL CONFERENCE ON ACOUSTICS, SPEECH AND SIGNAL PROCESSING (ICASSP); VANCOUCER, BC; 26-31 MAY 2013, INSTITUTE OF ELECTRICAL AND ELECTRONICS ENGINEERS, PISCATAWAY, NJ, US, 26 May 2013 (2013-05-26), pages 5642-5646, XP032508092, ISSN: 1520-6149, DOI: 10.1109/ICASSP.2013.6638744 [retrieved on 2013-10-18] * abstract * * Chapters 3 and 4 * | 1-16 | INV. H04N19/463 H04N19/625 |
| Y | US 2018/020218 A1 (ZHAO XIN [US] ET AL) 18 January 2018 (2018-01-18) * abstract * * paragraphs [0026] - [0070], [0124] - [0142] * | 1-16 | |
| Y | US 2014/254661 A1 (SAXENA ANKUR [US] ET AL) 11 September 2014 (2014-09-11) * paragraphs [0044] - [0080] * * abstract * | 1-16 | TECHNICAL FIELDS SEARCHED (IPC)<br><br>H04N |

The present search report has been drawn up for all claims

| Place of search | Date of completion of the search | Examiner |
|---|---|---|
| Munich | 11 April 2018 | Lindgren, Johan |

## ANNEX TO THE EUROPEAN SEARCH REPORT
## ON EUROPEAN PATENT APPLICATION NO.

EP 18 30 5085

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2018

| Patent document cited in search report | Publication date | Patent family member(s) | Publication date |
|---|---|---|---|
| US 2018020218 A1 | 18-01-2018 | US 2018020218 A1<br>WO 2018013953 A1 | 18-01-2018<br>18-01-2018 |
| US 2014254661 A1 | 11-09-2014 | KR 20150129715 A<br>US 2014254661 A1<br>WO 2014137159 A1 | 20-11-2015<br>11-09-2014<br>12-09-2014 |

EPO FORM P0459

For more details about this annex : see Official Journal of the European Patent Office, No. 12/82